# EUROPEAN PATENT APPLICATION

(11) **EP 2 657 054 A1**
(43) Date of publication of application: **30.10.2013**
(21) Application number: 13165427.9
(22) Date of filing: 25.04.2013
(51) Int. Cl.: B60J 7/22, B60J 7/00, B60J 7/043

(54) **Sunroof apparatus**

(30) Priority: 25.04.2012 JP 2012099361
(71) Applicant: Yachiyo Industry Co., Ltd., Sayama-shi Saitama (JP)
(72) Inventor: Katayama, Hajime, Sakura-shi, Tochigi (JP); Oshima, Kazuya, Sakura-shi, Tochigi (JP)
(74) Representative: Piésold, Alexander James

(57) **Abstract**

Provided is a sunroof apparatus (1) comprising: a sunroof panel (2) to move to open or close the opening (Ua); a frame (3) to support the sunroof panel so that the sunroof panel is movable; and a deflector mechanism (4) to be disposed along a front edge of the opening and to go up or down in accordance with an opening or closing movement of the sunroof panel. The deflector mechanism comprises a pair of arms (31, 31) connected to each of left and right sides of the frame so that each arm rotates; an air deflector blade (32) connecting the pair of arms with each other; an urging device (34) to urge the pair of arms with the air deflector blade upward; and a drain gutter (35) equipped on the air deflector blade along a width of the blade, and a receiving part (35b) of the drain gutter is positioned always under the front edge of the opening.

## Description

### BACKGROUND OF THE INVENTION

### 1. Technical Field

The present invention relates to a sunroof apparatus to be installed on a vehicle's roof.

### 2. Description of Background Art

For example, a structure described in the patent document 1 (JP, patent No. 4313399, B) is known as a sunroof apparatus to be installed over an opening of a vehicle's roof. The sunroof apparatus described in the patent document 1 comprises a sunroof panel to move to open or close the opening of the roof, a frame to support the sunroof panel so that the sunroof panel is movable, and a deflector mechanism disposed along a front edge of the opening of the roof and to go up or down according as the sunroof panel moves to open or close the opening. The frame is positioned under the opening of the roof and has a closed frame form.

The deflector mechanism includes a pair of arms disposed on both sides in a width direction of the deflector mechanism, an air deflector blade to connect the arms, a pair of support parts disposed on the frame and to support a base end portion of the arm rotatively around a pin, and an urging device to urge a front end portion of the arms upward. Discordant and low frequency vibration sound called "wind-throb" is generated when a vehicle runs while the sunroof panel keeps the opening open. The discordant sound can be decreased by the deflector mechanism.

And then, a drain groove to drain rain water or the like flowing down from the opening of the roof and/or the air deflector blade is formed along an entire width of a front part of the frame. The rain water or the like is drained outside from drain ports formed at left and right corners of the frame.

Patent document 1: Japanese Patent No. 4313399, B

### BRIEF SUMMARY OF THE INVENTION

There is a problem of inhibited design freedom for the sunroof apparatus because the drain groove is formed along the entire width of the front part of the frame in the prior sunroof apparatus.

At least the preferred embodiments of the present invention seek to solve such a problem. It is an object of at least the preferred embodiments of the present invention to provide a sunroof apparatus equipped with a drain device and capable of enhancing a design freedom.

The present invention provides a sunroof apparatus to be installed over an opening of a vehicle's roof, comprising:
a sunroof panel to move to open or close the opening;
a frame to support the sunroof panel so that the sunroof panel is movable; and
a deflector mechanism to be disposed along a front edge of the opening and to go up or down in accordance with an opening or closing movement of the sunroof panel,
wherein the deflector mechanism comprises
a pair of arms connected to each of left and right sides of the frame so that each arm rotates around a shaft prolonged in the left-right direction;
an air deflector blade connecting the pair of arms with each other;
an urging device to urge the pair of arms with the air deflector blade in a direction to become far from the frame; and
a drain gutter equipped on the air deflector blade along a width of the air deflector blade,
a receiving part of the drain gutter being positioned always under the front edge of the opening.

By the sunroof apparatus mentioned above, the rain water or the like flowing down from the front edge of the opening or from the air deflector blade can be drained through the drain gutter equipped on the air deflector blade. A drain groove formed at the middle portion of the front part of the frame in the prior art becomes needless. Therefore, a design freedom for the front part of the frame and for the surroundings can be enhanced.

Furthermore, it is preferable that the sunroof apparatus further comprises a drain groove on each of left and right sides of the frame.

And furthermore, it is preferable that each of left and right ends of the drain gutter is positioned over the corresponding drain groove, and each of left and right portions of the receiving part of the drain gutter inclines downward so as to become closer to the corresponding drain groove.
By the sunroof apparatus mentioned above, rain water or the like flowing down into the drain gutter can smoothly flow toward each drain groove.

By the sunroof apparatus according to the present invention, a design freedom for the sunroof apparatus can be enhanced while the sunroof apparatus is equipped with a drain device.

### BRIEF DESCRIPTION OF THE SEVERAL VIEWS OF THE DRAWING

Certain embodiments of the present invention will now be described in greater detail, by way of example only, and with reference to the attached drawings, in which:
FIG. 1 is a schematic perspective view of a sunroof apparatus in a present embodiment;
FIG. 2 is a plan view of the sunroof apparatus in the present embodiment;
FIG. 3 is a plan view of a left side part of a front part of a frame of the sunroof apparatus in the present embodiment;
FIG. 4 is a cross sectional view taken along the line I-I of FIG. 3;
FIG. 5 is a cross sectional view taken along the line II-II of FIG. 2;
FIG. 6A is a cross sectional view taken along the line III-III of FIG. 2 showing one aspect of the action of the deflector mechanism of the sunroof apparatus in the present embodiment when a sunroof panel is completely closed; and
FIG. 6B is a cross sectional view taken along the line III-III of FIG. 2 showing another aspect of the action of the deflector mechanism of the sunroof apparatus in the present embodiment when the sunroof panel is opened.

### DETAILED DESCRIPTION OF THE INVENTION

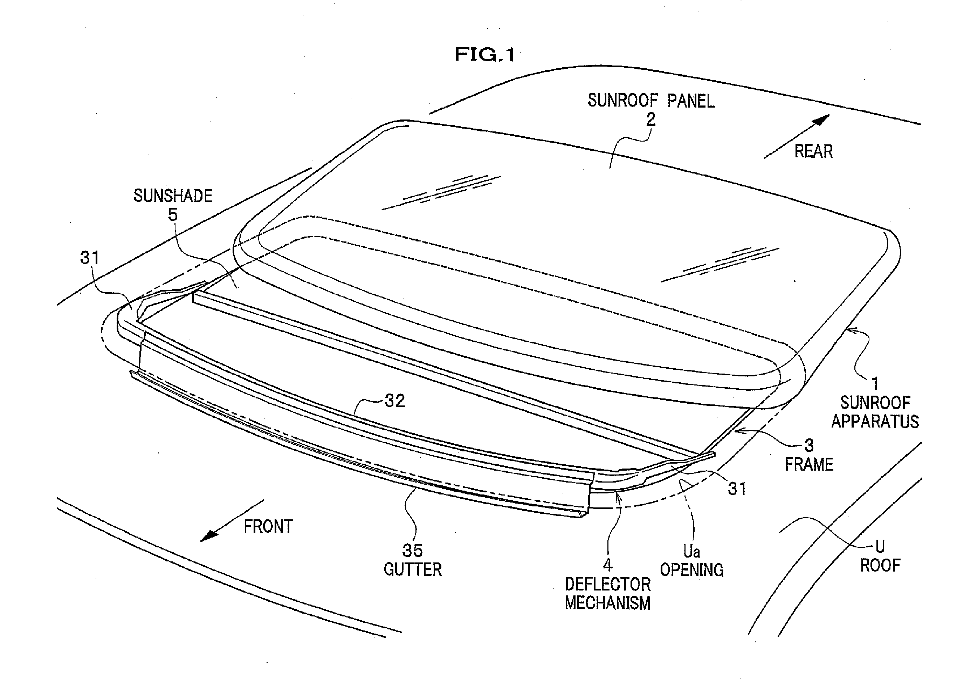

An embodiment according to the present invention will be described in detail with reference to the attached drawings. As shown in Figure 1, a sunroof apparatus 1 in the present embodiment is installed over an opening Ua of a vehicle' s roof U. A car is one type of the vehicle. The sunroof apparatus 1 comprises a sunroof panel 2, a frame 3, a deflector mechanism 4 and a sunshade 5. Each direction toward a front, rear, left, right, top or bottom in the following description and the drawings is the same direction as viewed from a driver sitting in the vehicle. For convenience of explanation, an edge contour of the opening Ua is shown by a two-dot dash line and a broken line in Figure 1.

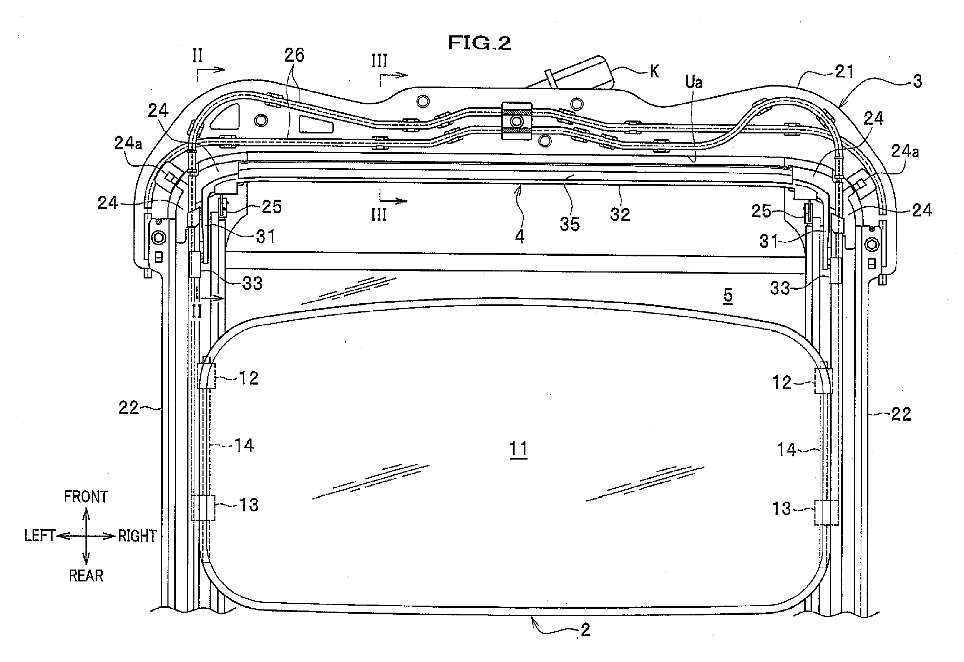

The sunroof panel 2 includes a panel body 11, front sliders 12, 12, rear sliders 13, 13 and panel brackets 14, 14 as shown in Figures 1 and 2. The sunroof panel 2 is configured to be movable in a front-rear direction against the frame 3 so that it opens or closes the opening Ua of the roof U. The panel body 11 is a transparent plate made of glass. The front slider 12 is installed on each of left and right sides of the front part of the panel body 11. The rear slider 13 is installed on each of left and right sides of the rear part of the panel body 11. The panel bracket 14 is installed on each of left and right sides of the middle part of the panel body 11.

The frame 3 is a member for supporting the sunroof panel 2 and the sunshade 5 so that these are movable in the front-rear direction as shown in Figures 1 and 2. The frame 3 is positioned under the opening Ua of the roof U, and has a closed frame form along an edge contour of the opening Ua. The frame 3 includes a front part 21, a pair of guide rails 22, 22 extending rearward from each of left and right end portions of the front part, and an appropriate member connecting the pair of guide rails at the rear ends of the pair of guide rails. The front part 21 is made of plastic and each guide rail 22 is made of metal in the present embodiment.

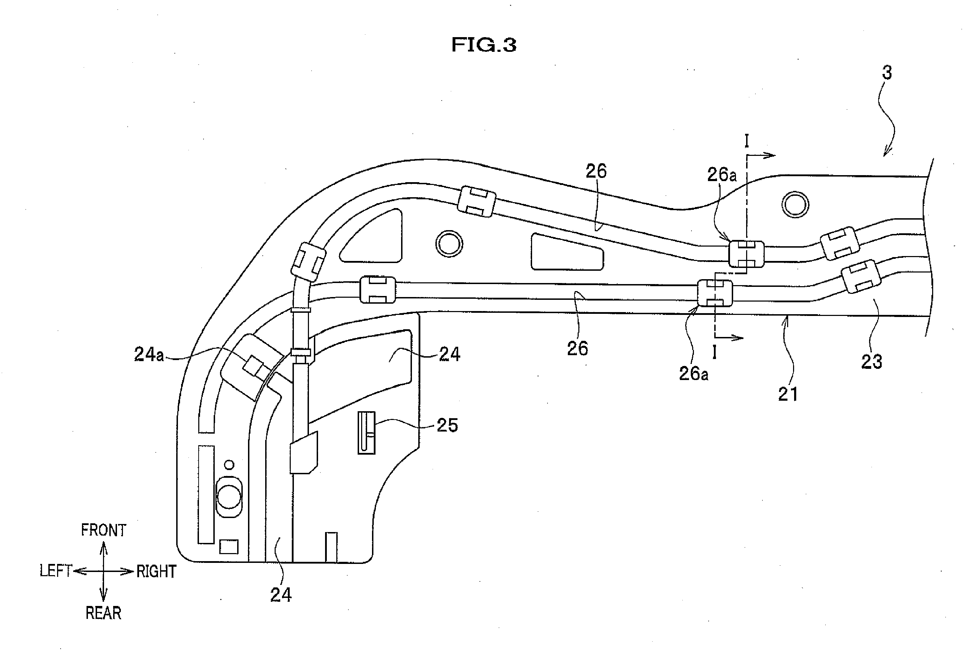

The front part 21 has a main body 23, drain grooves (first drain grooves) 24, 24, hook parts 25 , 25 and pipe-hold grooves 26, 26 to hold each pipe therein as shown in Figures 2 and 3. The main body 23 is a plate-like part showing a U or ] shape in a plan view. Each rear end of left and right sides of the main body 23 is fitted to the corresponding guide rail 22. A drive unit K is installed in the middle of the front side of the main body 23.

The drain grooves 24, 24 are formed at each corner of the left and right sides of the main body 23. Each drain groove 24 is formed in a curved form along the corresponding corner of the main body 23 in a plan view. A drain port 24a to drain the rain water or the like outside is formed in the anterior part of each drain groove 24. Each drain groove 24 receives the rain water or the like flowing down from a drain gutter 35 to be described later, and drains it through the corresponding drain port 24a.

Each hook part 25 is a part to hook an urging device 34 to be described later. Each hook part 25 may be a separate member from the main body 23, but is formed integrally with the main body 23 in the present embodiment.

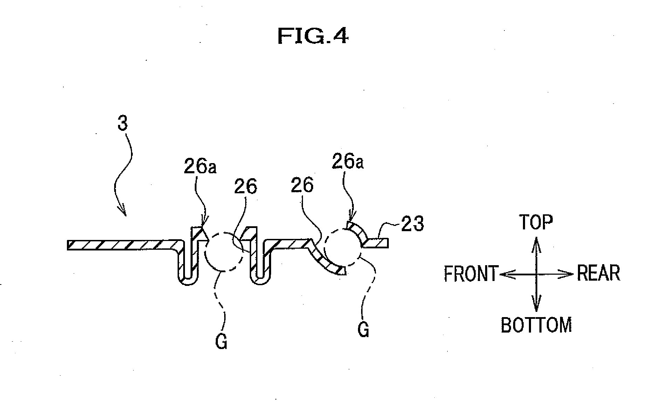

Pipe-hold grooves 26, 26 are prolonged toward each of the left and right sides of the main body 23 from the middle of the main body 23, and are further curved toward each rear end along a curved corner's contour of the main body 23. Each pipe-hold groove 26 is a portion for holding a guide pipe G covering a cable to connect the drive unit K with the corresponding rear slider 13 provided on the sunroof panel 2. Each pipe-hold groove 26 is provided with a plurality of clips 26a for holding the guide pipe G as shown in Figures 3 and 4. Each guide pipe G can be fixed to the front part 21 by the clips 26a in one action.

The pair of guide rails 22, 22 are disposed on left and right sides of the opening Ua. They are members for guiding the sunroof panel 2 and the sunshade 5 in the front-rear direction. Each guide rail 22 is made of aluminum alloy through an extrusion molding in the present embodiment. Two guide rails 22, 22 are set symmetrically against a centerline extending in the front-rear direction of the frame 3. A front end part of each guide rail 22 is fitted to and fixed to a left or right rear end part of the front part 21 by fastening means or the like, for example a bolt.

Each guide rail 22 is provided with a slide groove for the front slider 12 and the rear slider 13 of the sunroof panel 2 to slide therein, a shoe groove for a shoe or shoes formed at or attached to each of left and right ends of the sunshade 5 to slide therein, a cable groove for the cable to be inserted therein, and a second drain groove to receive rain water or the like dropping from a left or right end of the sunroof panel 2. These grooves are not shown with reference numerals. The second drain groove formed in each guide rail 22 communicates with the drain groove 24 formed in the front part 21. Namely, the rain water or the like dropped into the second drain groove formed in each guide rail 22 flows into the drain groove 24.

The aforementioned drive unit K includes a known motor, and is formed so as to engage with a driven gear mounted on an outer surface of the cable. Then, the cable connects the drive unit K and the rear slider 13 of the sunroof panel 2. The sunroof panel 2 is moved in the front-rear direction to open or close the opening Ua by the cable being pulled or pushed by the drive unit K. The sunroof panel 2 is tilted up or down by a known cam mechanism formed in each panel bracket 14. An explanation of the apparatus for tilting up or down the sunroof panel 2 is omitted here because it is the same as in the prior art.

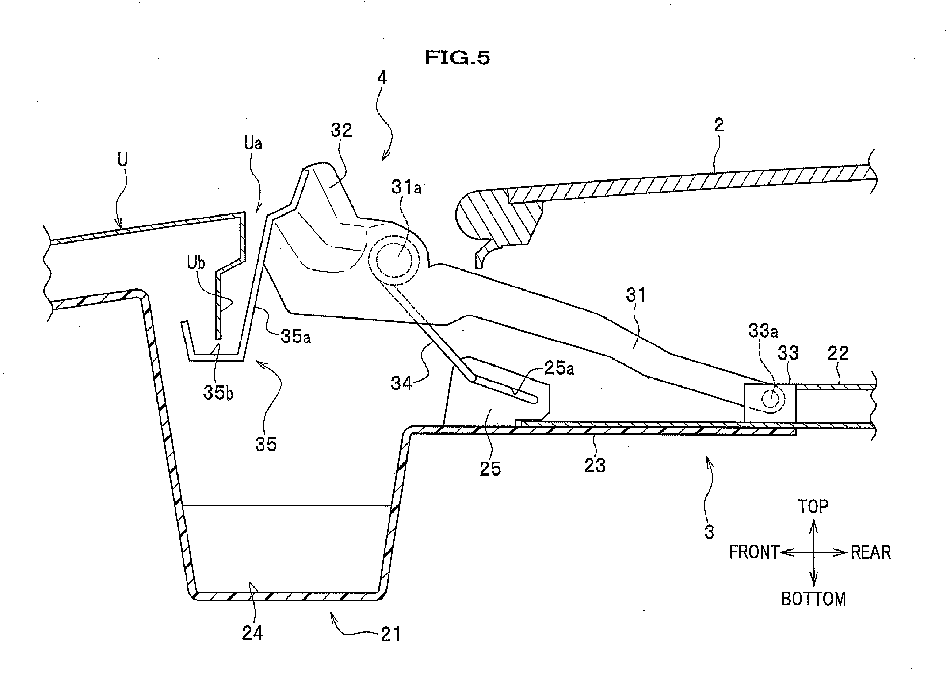

The deflector mechanism 4 includes a pair of arms 31, 31, an air deflector blade (hereinafter, a blade) 32, a pair of support parts 33, 33, a pair of urging devices 34, 34, and a drain gutter 35 as shown in Figures 1 and 5. The deflector mechanism 4, except for the support parts, goes up or down in accordance with an opening or closing movement of the sunroof panel 2 to prevent the wind-throb noise.

One of the pair of arms 31, 31 is disposed on one side of left and right sides of the frame 3, and the other is disposed on the other side. Each arm 31 extends in the front-rear direction in a plan view.

The blade 32 is a plate-like member that extends in the left-right direction and connects both front ends of the arms 31, 31 with each other. The blade 32 is formed along a front edge of the opening Ua. Unevenness to regulate an air flow may be appropriately formed on the blade 32.

Each support part 33 supports a corresponding one of base ends (rear ends) of the arms 31, 31 so that each arm 31 can rotate against the corresponding guide rail 22. Each support part 33 is provided with a pin 33a prolonged in the left-right direction. Each pin 33a is inserted into the base ends of the arms 31, 31, respectively.

Each urging device 34 urges a corresponding one of the front ends of the arms 31, 31 upward. The urging device 34 in the present embodiment is a torsion spring formed in a coiled form. One end part of each coiled torsion spring 34 is attached to a pin 31a extending in the left-right direction at a front end part of the corresponding arm 31. The other end part of each coiled torsion spring is engaged with a slit 25a of the corresponding hook part 25 and is movable along the slit 25a.

The drain gutter 35 is attached to the front face of the blade 32, and extends in the left-right direction as shown in Figures 1 and 5. The drain gutter 35 has a fixed part 35a to be fixed to the blade 32 and a receiving part 35b to receive the rain water or the like. The drain gutter 35 receives the rain water or the like flowing down from the blade 32 and/or an end face Ub of the roof U positioned at a front edge of the opening Ua, and flows it down into the drain grooves 24, 24. The drain gutter 35 is made of plastic in the present embodiment, but is not limited to it.

The fixed part 35a is a plate-like member, and is fixed to the blade 32 by means of glue. The receiving part 35b is positioned under the end face Ub of the roof U. A bottom face of the receiving part 35b is highest at the middle position thereof and inclines downward toward each end in the left-right direction.

A position of the blade 32 in the front-rear direction changes as the blade 32 goes up or down because the blade 32 rotates around the pin 33a. The drain gutter 35 can receive the rain water or the like flowing down from the blade 32 or the end face Ub regardless of whether the drain gutter 35 is positioned at, the highest, a middle or the lowest position. And each of left and right ends of the drain gutter 35 is positioned over the corresponding drain groove 24.

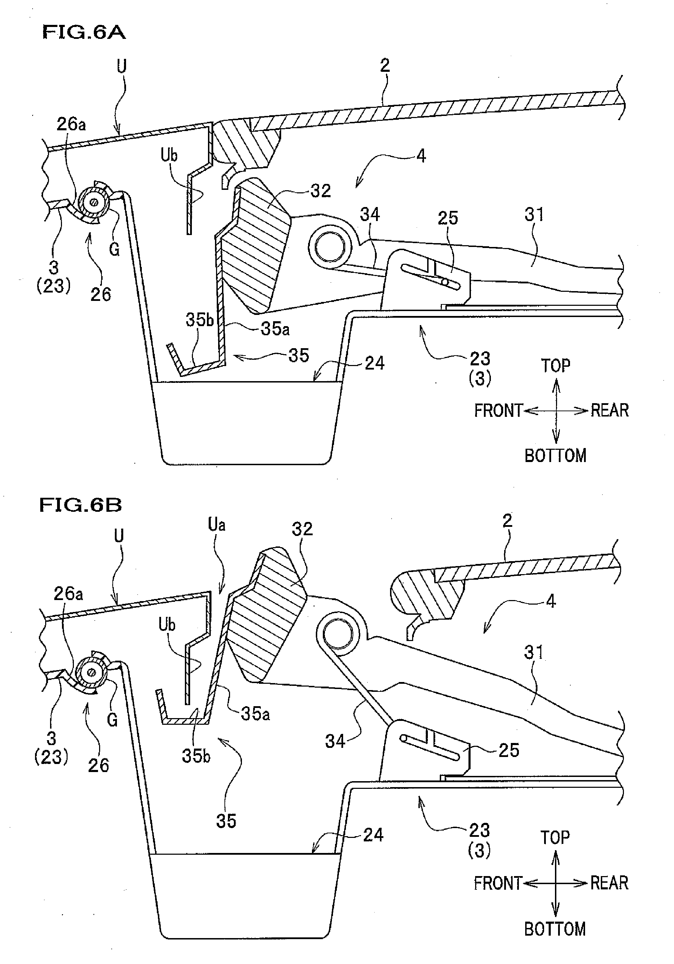

Operation and effect of the deflector mechanism 4 will be explained in the following. In a case when the sunroof panel 2 is closed as shown in Figure 6A, each arm 31 of the deflector mechanism 4 is pushed downward by a bottom surface of the sunroof panel 2 so that the blade 32 is accommodated below the sunroof panel 2. In this case, the receiving part 35b of the drain gutter 35 is positioned under the end face Ub. Each arm 31 is roughly in a horizontal state, and furthermore, the receiving part 35b is positioned lower than the arm 31.

In a case when the sunroof panel 2 is opened as shown in Figure 6B, the front end part of each arm 31 is urged upward by the corresponding urging device 34. In this case, the upper end of the blade 32 is positioned higher than the front edge of the opening Ua. Even in this case, the receiving part 35b of the drain gutter 35 is under the end face Ub.

According to the above-mentioned sunroof apparatus 1, the drain gutter 35 of the deflector mechanism 4 can receive the rain water or the like flowing down from the roof U and/or the blade 32 and can drain it into the drain grooves 24, 24 formed on the both sides of the frame 3.

A drain groove formed at the middle portion of the front part 21 in the prior art is not needed in the present embodiment. Therefore, design freedom for the front part 21 of the frame 3 and for the surroundings can be enhanced.

Embodiments according to the present invention have been explained in the above. But they may be properly modified within the scope of the present invention. A deflector mechanism 4 where the blade 32 is fixed to the arm 31 has been described in the present embodiments, but there may be provided a deflector mechanism where a position of the blade 32 against the arm 31 is changeable as the blade 32 goes up or down. The drain gutter 35 is then attached to or formed on such a deflector mechanism. Furthermore, a flexible member like a tube may connect each end of the drain gutter 35 and the corresponding drain groove 24. As a result, the rain water or the like flowing down from the drain gutter 35 can be surely drained through such a flexible member even when the blade 32 goes up.

**DESCRIPTION OF REFERENCE NUMERALS**

| | |
|---|---|
| 1 | Sunroof apparatus |
| 2 | Sunroof panel |
| 3 | Frame |
| 4 | Deflector mechanism |
| 11 | Panel body |
| 12 | Front slider |
| 13 | Rear slider |
| 14 | Panel bracket |
| 21 | Front part |
| 22 | Guide rail |
| 24 | Drain groove |
| 31 | Arm |
| 32 | Air deflector blade |
| 33 | Support part |
| 34 | Urging device |
| 35 | Drain gutter |
| U | Roof |
| Ua | Opening |
| Ub | End face of roof at front edge of opening |

## Claims

1. A sunroof apparatus (1) to be installed over an opening (Ua) of a vehicle's roof (U), comprising:
a sunroof panel (2) to move to open or close the opening;
a frame (3) to support the sunroof panel so that the sunroof panel is movable; and
a deflector mechanism (4) to be disposed along a front edge of the opening and to go up or down in accordance with an opening or closing movement of the sunroof panel,
wherein the deflector mechanism comprises
a pair of arms (31,31) connected to each of left and right sides of the frame so that each arm rotates around a shaft (33a) extending in the left-right direction;
an air deflector blade (32) connecting the pair of arms with one another;
an urging device (34) to urge the pair of arms with the air deflector blade in a direction away from the frame; and
a drain gutter (35) equipped on the air deflector blade along a width of the air deflector blade,
a receiving part (35b) of the drain gutter being positioned always under a front edge of the opening.

2. The sunroof apparatus according to claim 1, further comprising a drain groove (24) on each of left and right sides of the frame.

3. The sunroof apparatus according to claim 2, wherein each of left and right ends of the drain gutter is positioned over the corresponding drain groove, and each of left and right portions of the receiving part of the drain gutter inclines downward so as to become closer to the corresponding drain groove.
